Europäisches Patentamt

European Patent Office

Office européen des brevets

(19)

(11) Publication number: **0 037 278**
**A2**

# (12) EUROPEAN PATENT APPLICATION

(21) Application number: **81301378.6**

(22) Date of filing: **30.03.81**

(51) Int. Cl.³: **B 04 C 5/13**

(30) Priority: **01.04.80 CA 348976**

(43) Date of publication of application:
**07.10.81 Bulletin 81/40**

(84) Designated Contracting States:
**DE FR GB IT SE**

(71) Applicant: **ELAST-O-COR PRODUCTS & ENGINEERING LIMITED**
**2828 "B" 54 Avenue, S.E.**
**Calgary, Alberta, T2C 0A7(CA)**

(72) Inventor: **Richters, Johannes Jakobus**
**614-12th Avenue N.E.**
**Calgary Alberta(CA)**

(74) Representative: **Smith, Philip Antony et al,**
**REDDIE & GROSE 16 Theobalds Road**
**London WC1X 8PL(GB)**

(54) Output header for hydrocyclones with concentric accept outlets.

(57) A bank of hydrocyclones 10 fed tangentially from a supply header 11 are used to separate a pulp suspension for papermaking. High density solids are ejected from the reject opening 14 while the bulk of the mixture passes through the accept opening 17 and enters an accept header nipple 20. Here the central air core 16 and a small amount of liquid are withdrawn by central nipple 25 to compartment 23 of header 21 and thence to outlet 27 which is under partial vacuum. The desirable accept flow enters compartment 22 of the header and is withdrawn for further processing. Also described is a three-compartment header, for a single or double bank of hydrocyclones, in which the third compartment carries the supply flow which is axially fed and set in rotation by spiral vanes.

./...

Croydon Printing Company Ltd.

Fig 1

- 1 -

## OUTPUT HEADER FOR HYDROCYCLONES WITH CONCENTRIC ACCEPT OUTLETS

This invention relates to the separation of solids, fluids and gases having different specific gravities which are before separation intermixed randomly and after separation being classified to such a degree that one can speak of desirable and undesirable portions, which are further processed separately.

In the pulp and paper industry it is required to separate to a high degree of purity the acceptable tree pulp fibers, or other plant fibers, or recycled waste paper fibers, from undesirable solids and gases which are in most cases inadvertently entrained into or are an unavoidable part of the process of pulp and paper making and recycling.

In pulp and paper making and recycling processes one uses water as a carrying medium for the acceptable fibers, undesirable solids such as rust chips, sand, plastic films, adhesives as well as air which is undesirable in most processes and occurs in the form of bubbles or is adhered to fibers.

Many different and complicated devices are used to accomplish this separation and not all these devices necessarily accomplish this separation in a simple manner. It is an object of the invention disclosed herein to effect a separation, not only in a simple manner, but also by making use of a minimum of equipment and space and energy as compared to existing devices, while making use of hydrocyclones, which have been used extensively for separation in the industry. The invention includes a new design of header and a novel way of disposing of unwanted fractions of the suspension.

As is well known in the prior art, the pulp suspension, in which the unwanted fractions are intermixed, is fed into a hydrocyclone and subjected to high centrifugal forces. Due to these forces a fractionating of the pulp suspension occurs due to different specific gravities and shapes of the particles involved. The separation within the hydrocyclone has the following general pattern: closest to the inside wall the heaviest particles (e.g. sand) tend to concentrate. Inwardly of the heaviest particles towards the center there are the pulp fibers, and still further inwardly are the solids that are lighter than the pump fibers. These solids are all suspended in the water. Towards the very center the air, which is the lightest fraction in the pulp suspension, will concentrate.

Since the tangential movement of the liquid in the hydrocyclone is governed by the formula $V \times R = Constant$, it can be seen that when one approaches the centerline of the hydrocyclone, where $R=0$, the theoretical velocity approaches infinity. Because of other factors this does not happen; however, there is a very high rotational energy around the centerline. The high speed rotational motion creates an air core in the liquid along the centerline. From the feed at the large end the liquid is forced away towards the reject. The wall of the reject outlet passage is preferably, but not necessarily, provided with a spiral groove defining means of the type illustrated in Canadian Patent 941,753 February 12, 1974 and U.S. Patent No. 3,800,946 dated April 2, 1974 and granted to the assignee of the present invention.

The heaviest solids are pushed along the wall of the cleaner and forced through the reject opening. This reject opening has a limited size and allows for rejecting of these heaviest solids and a small portion of the somewhat lighter solids, mostly pulp fibers, plus a small amount of the water. The size of the reject is chosen such that a maximum of heavy solids is rejected with a minimum of pulp fibers since these pulp fibers are from the acceptable type.

Since the flow inside the hydrocyclone of course follows the route of least resistance and since the reject opening being small creates a high resistance for the large flow occurring in the cleaner, the part of the flow not rejected is forced to move away again from the reject and to return around the core towards the axially placed accept, which is substantially larger than the reject opening. When this flow reaches the accept opening separation of the heaviest particles has been completed and they have been rejected. The flow has now a highly rotational character with air in the center, surrounded by a water flow with suspended solids of lower specific gravity than the pulp fiber located towards the inside and the pulp fiber, (now the heaviest solids) located toward the outside of this water flow.

It should be noted that this latter or secondary flow moves in the same rotational direction as the original flow but unlike the original feed flow which moves axially away from the feed opening towards the reject opening, this secondary flow moves axially within the original flow towards the accept opening away from the reject opening, the accept opening being located adjacent to the feed opening.

It should also be noted that the prior art has provided two basic types of means for feeding the hydrocyclones. The first is the well known conventional type having a feed flow tangentially into the large end of the hydrocyclone through one or more openings. The second type is illustrated in U.S. Patent 4,163,719 (Canadian Patent No. 1,063,974 October 9, 1979) granted to assignee of the present invention, where the hydrocyclone is fed axially from the large end and the flow is deflected and accelerated into a helical flow by one or more spiral vanes resulting in basically the same flow pattern within the separating chamber as in the first type but at a lower energy loss and hence lower feed pressure.

Both of the above types of hydrocyclones are used singly or in multiple groups mostly in the form of banks of single or double rows. The above mentioned conventional hydrocyclone is fed through a tangentially disposed feed pipe which in turn is fed from a common simple feed header. The accepted flow containing air, and water with suspended lighter than pulp fiber solids and the bulk of the pulp fiber flows through the accept pipe into a common simple accept header where, if not separated at that point, the air and water and solids will again be intermixed.

The above mentioned second type of hydrocyclone makes possible the use of a compact arrangement of feed and accept header, where the feed and accept headers are combined in one header, with the two flows being segregated, e.g. by a divider wall and the hydrocyclones fed from one compartment of this combination header with the accept flow containing air and water and solids flowing to the other compartment of this combination header, where if not separated, they will again be intermixed.

The reject flow is in most cases collected into a common header or trough and because it has a relatively high consistency it is diluted by an externally supplied water flow (which may contain a minimum amount of pulp fibers, such as so-called white water) and further processed.

Since the accept flow contains the desirable pulp fibers special attention is paid to it. The accept flow may be processed and thickened on equipment where the water is removed by vacuum means and dryers with the final product appearing in sheet form. However, air that was trapped with the fibers puts an extra burden on the vacuum equipment removing the water. Also air may cause thin spots in the final production sheet, due to the cushioning effect of air containing foam in the headbox. Also the aforementioned solids that have a lighter specific gravity than the pulp fibers and have become intermixed with the pulp fibers in the accept flow are often considered contaminants and may be the cause of a lesser grade of product.

It is thus highly desirable to remove this air and these contaminants from the accept flow before it reaches the thickening equipment. In some prior art operations air only is removed by subjecting the accept flow to a vacuum thus allowing the air to boil out by lowering the boiling point. This requires very large tanks, which are additional to the equipment already used for maintaining the hydrocyclones. Furthermore, the accept fluid is being subjected twice to vacuum equipment which makes for high processing costs.

The present invention eliminates these extra costs by going right to the place where the separation of air and water containing the contaminants and pulp fibers has already occurred, namely the accept flow leaving the hydrocyclone.

As is well known, the accept flow, before entirely leaving the hydrocyclone will pass through the accept nipple of the hydrocyclone which is preferably of slightly divergent shape. The length of this nipple allows the accept flow to stabilize in a rotational motion with the previously mentioned separation of air at the core and water to the outside containing contaminants concentrated around the air core with the pulp fibers being to the outside. The slight divergence is recommended so that according to Bernouilli's law the decrease of velocity causes an increase in pressure, thus slightly curtailing the diameter of the air core. At the end of the accept nipple the flow leaves the hydrocyclone in very orderly fashion in such a way that separation of desirable and undesirable accept flow can take place.

Since the accept flow is entering the header at this point, that part of the flow that is undesirable, namely the air core and the contaminants rotating right around the air core, are to be intercepted here. This is done by a properly sized nipple mounted co-axially, with approximately the same size as the air core. The air core and water with the contaminants and a small portion of the fibers will be removed through this small nipple while the rest of the accept flow consisting of water with the desirable pulp fibers will be removed via the annulus of this small pipe and the nipple of the header that connects to the accept nipple of the hydrocyclone. Thus now the accept flow from the hydrocyclone is separated into a primary accept flow containing the desirable pulp fibers in water suspension and the secondary accept flow containing a mixture of air, water, contaminants and a small amount of pulp fibers. The above general method for separating the accept flow using concentrically arranged accept nipples is known per se in the art, reference being had to Czechoslovacian Patent No. 102,756 issued February 15, 1962 to Rudolf Zemanek. Reference may also be had to British Patent No. 782,823 dated September 11, 1957, Figure 3.

The invention set forth herein relates to a novel way of handling these two accept flows after they emerge from the hydrocyclone separators.

In one aspect the invention provides a header for use with a bank of hydrocyclone separators comprising (a) a generally elongated hollow shell having a divider wall therein and extending longitudinally thereof to divide the header into first and second compartments, (b) a first set of nipples leading into said first compartment in a lateral direction relative to the lengthwise dimension of the header and adapted to each be connected to a respective one of the accept outlets of the hydrocyclone separators to receive the primary accept flow therefrom, (c) a second set of nipples each of which is disposed generally concentrically within a respective one of the nipples of the first set and each being sized in length and diameter so as to accommodate at least the air core which extends along the axis of each hydrocyclone separator during operation, (d) each of said second set of nipples being connected to said dividing wall and extending therethrough in fluid communication with said second chamber, (e) a first outlet connected to the first compartment for discharge of the combined primary accept flows, and (f) a second outlet connected to the second compartment for discharging the flow from the second set of nipples.

In a further aspect each of the nipples of the second set is of a diameter sufficient to receive therein not only the air core but also part of the liquid containing solids of low specific gravity which surrounds the air core during operation.

The header to be used with the traditional tangential entry form of hydrocyclone incorporates only two compartments, one for the primary accept flow and the other for secondary accept flow. In this case the above noted first set of nipples is connected directly to the shell of the header.

A combination accept header built in this way may have connected to it a series of hydrocyclones in a single or a double row. In the case where the combination accept header is used with two rows of hydrocyclones, two feed headers will be used, one for each row of hydrocyclones.

For separating the desirable and undesirable fraction of the accept flow in the second type of hydrocyclone described above employing an axial type of feed, the present invention provides for a feed-primary accept-secondary accept combination header to be used.

Thus, according to a further aspect of the invention said header includes a further divider wall therein which serves to define a third compartment in said header which is in addition to said first and second compartments, and a third set of nipples each being connected to said hollow shell and each being in generally concentric surrounding relation with a respective one of the nipples of the first set, said header having an inlet for feed suspension connected to the shell and communicating with the third compartment, and the generally annular region defined between the generally concentrically arranged first and third sets of nipples defining annular passages for the flow of feed suspension toward the individual hydrocyclone separators, each one of the third set of nipples being adapted for connection to the inlet feed end of a respective one of the hydrocyclone separators.

This third compartment combination header may have connected to its appropriate compartments a feed inlet pipe, preferably valved for feed pressure control and for shut-off, and an accept outlet pipe for the primary accept fraction, preferably valved for primary accept pressure control and for shut-off, and an accept outlet pipe for the secondary accept fraction.

This secondary accept outlet is preferably valved but since the secondary accept compartment will in practice be subjected to a partial vacuum as will be explained hereinafter, this valve is used for controlling the quantity of the secondary accept flow such that preferably all air and that fraction of the liquid that contains the unacceptable solids is removed but only a minimal quantity of acceptable pulp fiber solids will be taken out through this outlet.

Separation processes utilizing hydrocyclones perform this separation most often in stages where rejects of the first stage are diluted and fed to a second stage of hydrocyclones, and are subjected again to separation of which the accepted fraction is fed back into the first stage. The rejects of the second stage may be diluted and fed into a third stage, separated and the accept fraction of the third stage fed back to the feed of the second stage. The number of stages is determined such that the final reject of the last stage contains a minimal amount of pulp fiber which is to be considered a loss. In the pulp and paper industry a three or four stage system is most common but systems are not limited to this and configurations different from the one described above function quite satisfactory. However, this description is concentrated on the above configuration.

Removing air and undesirable secondary accept solids as described above is in most cases only essential in the first stage since only the desirable pulp fiber accept of this stage is processed further in the mill.

Subjecting the secondary accept compartment of the described combination headers of the first stage to a partial vacuum to remove the air-water-solids mixture and then to further process this mixture is preferably done in the following way. The suction to create the partial vacuum is created by a so-called jet pump or ejector. In such a device an operating fluid is forced through a jet nozzle which converts pressure energy into velocity and by way of momentum transfer a second fluid is drawn in and diffusers entrain and mix the fluids and velocity energy is changed back into pressure energy. The operating fluid of such a jet pump is the water that is used for diluting the reject flow from the hydrocyclone. The rejects of a bank of hydrocyclones is collected in a reject trough or reject header and is here collectively diluted. Thus with a jet pump connected to one end of the reject trough one uses one jet pump for a bank of cleaners or more if capacity requirements indicate this.

Thus in this way undesirable secondary accept solids and air are effectively removed and discharged together with the rejects of the hydrocyclones and this complete mixture may be further processed in order to recover any desirable pulp fiber. However, since the rejects of the first stage are fed into a second stage of which the accepts go back to the first stage an undesirable recycling of solids with a specific gravity less than that of pulp fibers may occur. Thus the subsequent stages of the separation process also should be equipped with the herein described novel separation process. This can be avoided by utilizing the following solution: the secondary accept flow of the first stage is taken to the reject trough of the last stage (3rd stage or 4th stage if a 3 or 4 stage system is used) and one or more jet pumps connected to this reject trough to create the desired suction in the secondary accept compartment of the first stage.

In drawings which illustrate exemplary embodiments of the invention:

Figure 1 is an axial section through separating apparatus employing a single row of conventional type hydrocyclones with a tangential feed inlet and fed from a single feed header and the accepted fluid collected in a two-compartment combination accept header;

Figure 2 is an axial section through separating apparatus employing a double row of a second type of hydrocyclone with axial feed inlet and with the main feed and the main accepts flowing through a three-compartment combination header;

Figure 3 is an axial section through a system employing a single row of the type of hydrocyclone shown in Fig. 2 on a slightly larger scale;

Figure 4 is a side elevation view of a typical bank of hydrocyclones of the type detailed in Figure 2 and Figure 3;

Figure 5 is a detailed view of the discharge of Figure 4;

Figure 6 is a detailed section of a typical jet pump;

Figure 7 is a three stage system for separation of suspensions by hydrocyclones using the principles of the invention;

Figure 8 is a modified version of Figure 7.

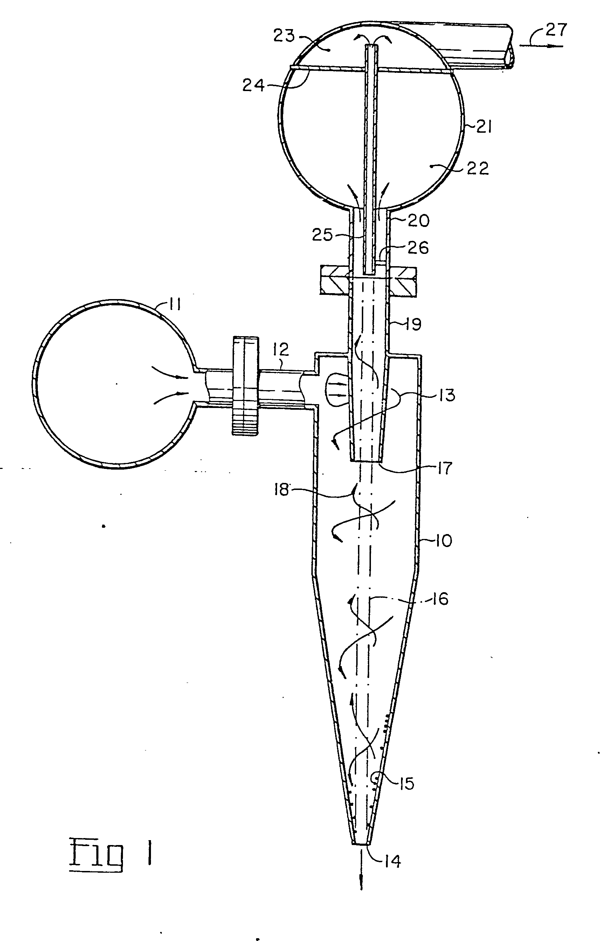

Referring to Figure 1 there is shown a conventional type of hydrocyclone 10 being fed from a feedheader 11 through a feed nipple 12 that is mounted tangentially to body 10. The fluid is forced into a spiralling motion 13 towards the reject opening 14. Between the feed opening and the reject opening 14 solids with higher specific gravity than the pulp fibers are separated at 15 from the pulp fibers and move against the inside wall towards the reject opening 14 and are discharged. Only a small quantity of pulp fibers and liquid are discharged as well to the reject opening 14. Due to the high velocity rotational motion and the centrifugal forces an aircore 16 is formed around the centerline. The bulk of the water - solids mixture turns back 180° from the reject opening 14 towards the accept opening 17 in a spiralling motion 18 and enters the accept nipple 19 of the hydrocyclone in orderly fashion, with the aircore 16 in the center. The hydrocyclone 10 is connected via the hydrocyclone accept nipple 19 to the accept header nipple 20 of the accept header 21. The accept header 21 has a generally tubular shell and is separated in two interior compartments 22 and 23 by a divider wall 24. The wall 24 is more or less parallel to the centerline of the header 21 but may deviate from the parallel somewhat to allow for improved flow velocity distribution. The nipple 20 which is properly sized to join the primary accept nipple 19 of the hydrocyclone 10 via a suitable flanged connection is connected to compartment 22 of this two-compartment header. The centerline of this nipple 20 is perpendicular to the centerline of the header and perpendicular to the width dimension of the divider wall 24. A smaller diameter nipple 25 for collecting the secondary accept flow is mounted co-axially inside the nipple 20 that collects the primary accept flow and it is supported inside this nipple by a small bracket 26 in such a way that the primary accept flow is minimally obstructed. This accept nipple 25 is connected to and extends through divider wall 24 and extends beyond it while leaving enough space between the end of this nipple and the wall of the header for an unobstructed flow of secondary accept material. By virtue of this arrangement the complete drainage of liquid away from the upper end of the nipple 25 is assured, i.e. all liquid will drain through the outlet 27, there being no chance of any back flow into nipples 25 occurring.

When the water – solids mixture rotating around aircore 16 leaves the hydrocyclone accept nipple 19 it enters the header accept nipple 20, connected to header 21. In the header accept nipple 20 the aircore 16 and some of the water-solids mixture is intercepted by nipple 25 which is centered in nipple 20 by means of bracket 26. The water – solids mixture not intercepted by nipple 25 flows into compartment 22 and is the desirable accept and is taken from this compartment via a further outlet (not shown in Fig. 1) for further processing. The air and a little amount of the liquid intercepted by nipple 25 flows into compartment 23 and is the undesirable accept and is taken from this compartment 23 by way of outlet 27 which is under the influence of a partial vacuum to be explained hereafter.

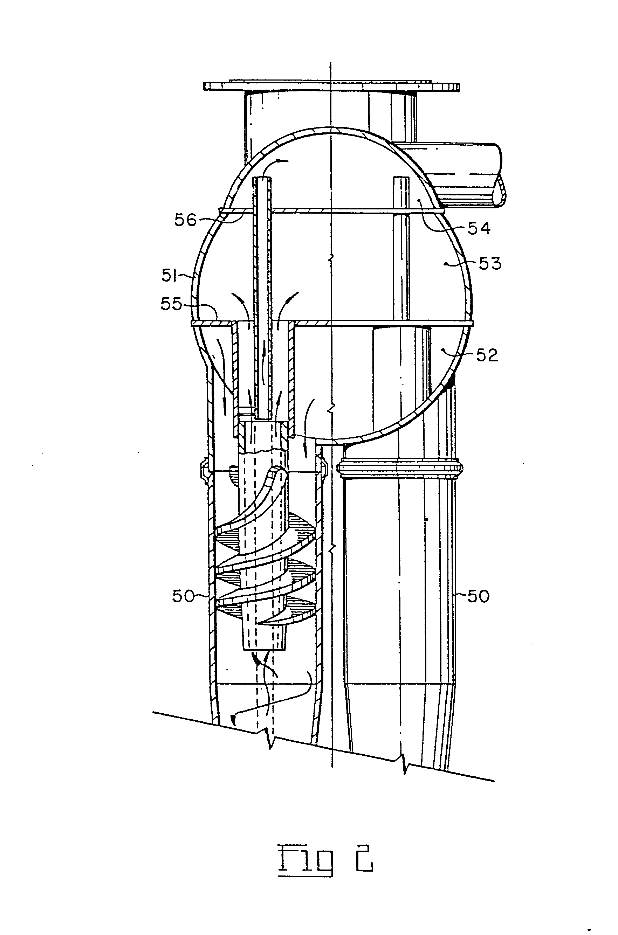

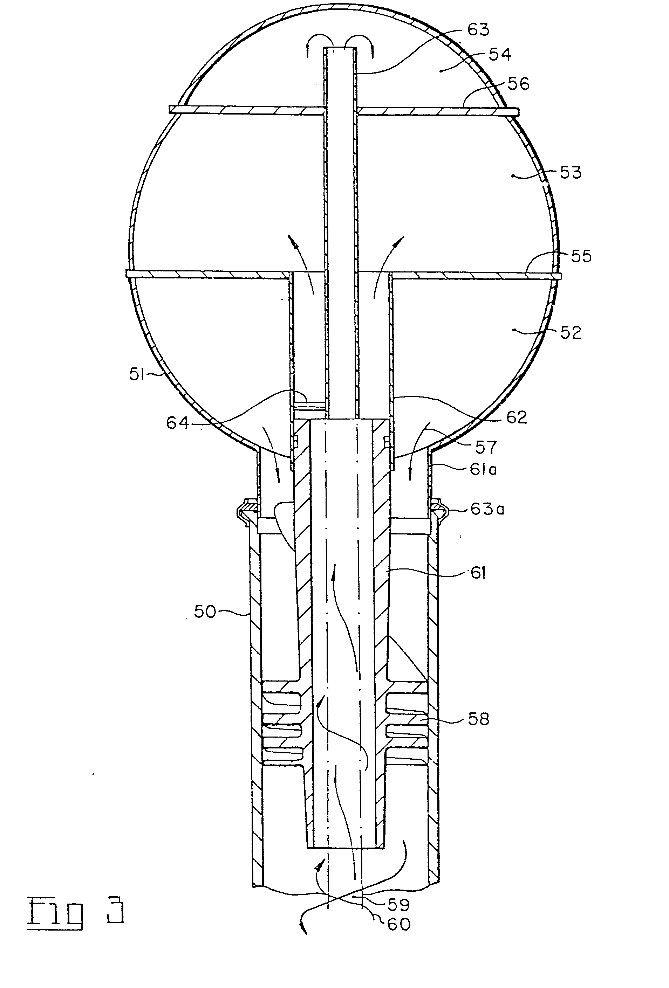

Referring to Figure 2 there is shown the top portion of an axial feed hydrocyclone 50 of the type described in our Canadian Patent No. 1,063,974 and connected to a further form of combination header 51. Figure 2 shows a double row of hydrocyclones, but for a further description, reference is had to Figure 3 which shows a single row on a larger scale.

This combination header 51 has a shell of tubular shape and is divided into three compartments 52, 53 and 54 by two divider walls 55 and 56. The divider wall 55 separates the feed compartment 52 from the primary accept compartment 53 and the latter is separated from the secondary accept compartment 54 by divider wall 56. These two walls 55 and 56 are mounted more or less parallel to the centerline of the combination header. They may, however, deviate from the parallel to allow for improved flow velocity distribution. The nipples 61a, 62, 63 for feed, primary accept and secondary accept respectively are mounted co-axially, with the centerline for these nipples being perpendicular to the centerline of the header 51 and perpendicular to the width dimension of the walls 55 and 56. The feed nipple 61a joins at one end of the outside wall of the hydrocyclone via a suitable band clamp 63a, and the other end is connected via the outer shell to the feed compartment 52 of the combination header. The primary accept nipple 62 joins at one end with the accept nipple 61 of the hydrocyclone and with the other end to the divider wall 55 that separates the feed compartment 52 from the primary accept compartment 53. These connections allow hydrocyclones to be removed and replaced quickly as described in our above noted Canadian Patent No. 1,063,974. The secondary accept nipple 63 is supported within the primary accept nipple 62 by bracket 64 in such a way that the primary accept flow is only minimally obstructed, while the other end is connected to the wall 56 that separates the primary accept and secondary accept compartments and as shown extends beyond this wall 56 while leaving enough space between the end of this nipple and the shell of the header to allow for an unobstructed flow of secondary accept material.

In operation, and via compartment 52 of header 51, the feed flow 57 enters the hydrocyclone axially, and this flow is directed into a spiralling motion by the spiral vanes 58. The high centrifugal forces created thereby form an aircore 59. The separation and return of flow in this hydrocyclone 50 is the same as described above for hydrocyclone 10. The returned spiralling flow 60 enters the accept nipple 61 still moving around the aircore 59 and continues within this nipple 61 till it leaves the hydrocyclone where nipple 61 joins with nipple 62 which in turn is connected to divider wall 55. When the aircore 59 and some of the water - solids mixture that spirals closest to and around the aircore leave the nipple 61 they are intercepted by nipple 63 and directed to compartment 54 while the rest of the water - solids mixture goes into compartment 53. Nipple 63 as noted above is centered inside nipple 62 by means of bracket 64 and this nipple is at its other end connected to wall 56. As mentioned before, compartment 52 contains the original fluid to be separated and is fed from previous equipment. Compartment 53 contains the desirable accept flow and it is taken from this compartment for further processing. Compartment 54 contains the undesirable accept flow of air and water with some solids and it is taken from this compartment by way of a partial vacuum to be explained hereafter.

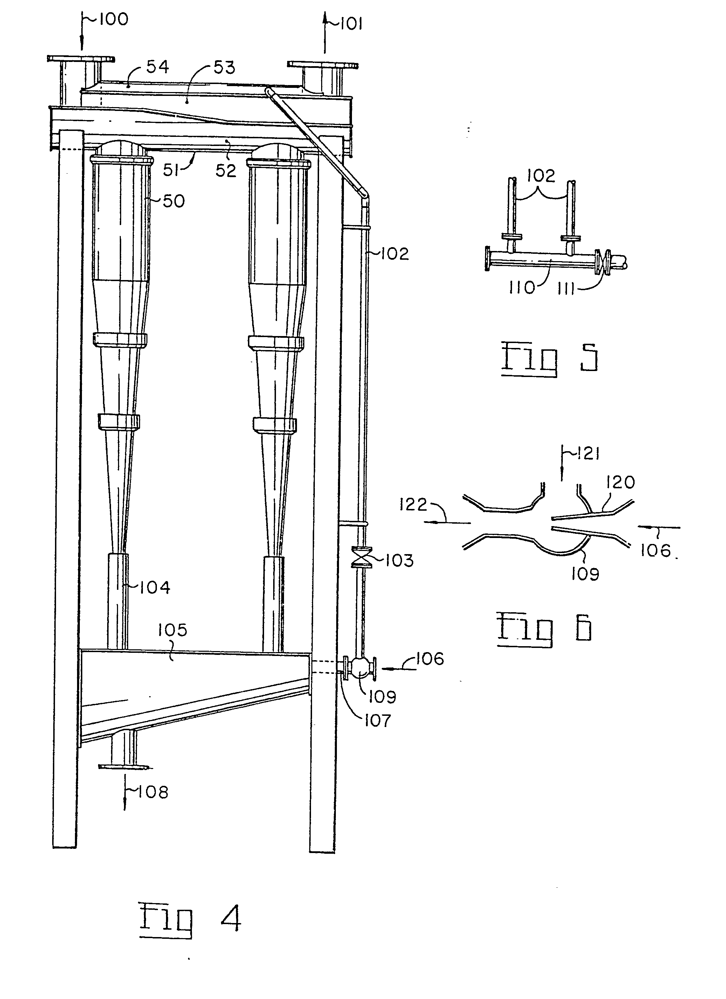

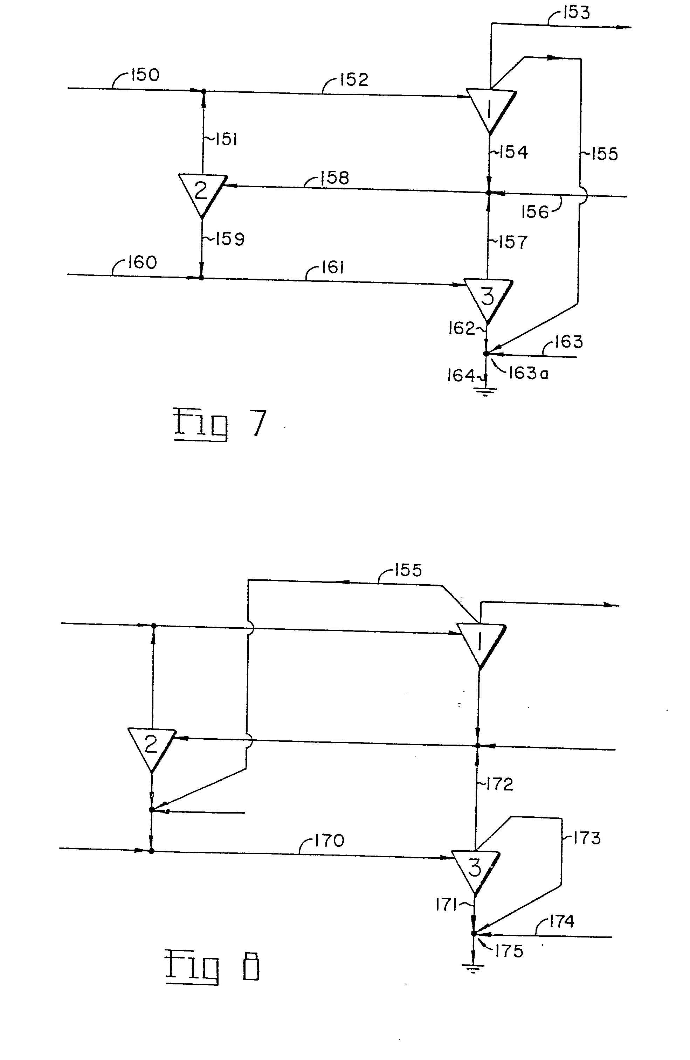

Referring to Figure 4 there is shown the side view of a bank of hydrocyclones utilizing the hydrocyclone of Figure 2 or Figure 3. Hydrocyclones 50 are connected to header 51 which includes compartments 52, 53 and 54. The fluid mixture enters the inlet 100 which leads into compartment 52. The desirable accept flow leaves the header from compartment 53 through outlet 101. The undesirable accept flow from compartment 54 leaves the header through pipe 102. Pipe 102 is provided with a valve 103 for flow control. The reject flow leaves the hydrocyclones at their reject ends, each of which is situated in a reject adaptor 104 of any suitable design and connected to a reject header 105 wherein the reject flow is collected. This reject flow is diluted by way of a flushing flow 106 supplied through nozzle 107. The diluted reject flow leaves the collecting header at 108 for further processing. Connected to nozzle 107 is a jet pump or ejector 109 detailed in Figure 6, to which also pipe 102 is connected. The dilution flow 107 will by way of jet pump 109 create suction in pipe 102 and in turn in compartment 54 and thus the air - water - solid mixture of compartment 54 will, together with dilution flow 106, be ejected through nozzle 107 into reject header 105 and thereafter be discharged through 108. Instead of creating the suction in compartment 54 by way of a jet pump 109 connected to a reject trough 105 built in the same structure as in which the header 57 is mounted, this jet pump may be mounted on another trough, part of another bank. It is possible, when more than one bank is used, parallel in one stage, that the discharge pipes 102 from more than one bank can be connected to a main header 110 (see Figure 5) which is valved with valve 111 for flow control and connected to a jet pump (or more than one if capacity requirements indicate this) which in turn is connected to the reject trough of one or more banks in the same or another stage.

Referring to Figure 6 there is shown the cross-section of a typical jet pump or ejector 109. The dilution or flush flow 106 enters and is accelerated by nozzle 120. Due to increased velocity the pressure is decreased and fluid is sucked in from pipe 102 (Figure 4) indicated by flow 121. The resulting mixture 122 is discharged into nozzle 107 (Figure 4) and flows into the collection trough 105.

Referring to Figure 7, there is shown a typical 3 stage system with banks of hydrocyclones indicated by the triangles numbered 1, 2, 3 respectively, indicating first stage, second stage, third stage respectively. Original pulp stock 150 is mixed with accept stock 151 from the hydrocyclones of the second stage and the resulting mixture 152 is fed into the hydrocyclones of the first stage where it is separated into desirable accepts 153 that go to subsequent equipment, e.g. a thickener, and a flow of the undesirable accepts 155, and a flow of rejects of heavy solids and a small portion of pulp fibers 154. The reject flow of the hydrocyclones of the first stage is diluted with dilution water 156 and mixed with accept flow from the hydrocyclones of the third stage 157. This total mixture is fed into hydrocyclones of the second stage as flow 158 and separated into an accept flow 151 and a reject flow 159. The reject flow 159 is diluted with dilution water and this diluted mixture is fed into the hydrocyclones of the third stage where it is separated into an accept flow 157 and a reject flow 162. The reject flow 162 is diluted with water flow 163. This flow 163 operates a jet pump 163a that removes the undesirable accept flow 155 from the first stage. Thus the final flow 164 that may be sewered consists of highly concentrated rejects from the hydrocyclones of the third stage 162, undesirable accepts from the hydrocyclones of the first stage 155 and dilution water 163. Only the hydrocyclone bank(s) of the first stage are equipped with the header(s) that have (has) the modification with the extra compartment for separating the undesirable accepts from the desirable accepts.

Referring to Figure 8 there is shown a modification of the layout of Figure 7. The undesirable accepts of the hydrocyclones of the first stage 155 are removed by a jet pump mounted on the reject trough of the second stage and the subsequent mixture is diluted and fed to the hydrocyclones of the third stage. This liquid mixture 170 is separated by the hydrocyclones in the third stage into a reject flow of heavy solids 171 (162 in Figure 7), a flow of desirable accepts 172, (157 in Figure 7) and flow of undesirable accept 173. A supply of dilution water 174 operates a jet pump 175 connected to the reject trough(s) of the bank(s) of the third stage which in turn removes the undesirable accept flow 173 and may be taken to the sewer together with reject flow 171. In the system shown in Figure 8 the bank(s) of the first stage and the bank(s) of the third stage have the modification with the extra compartment for separating the undesirable accept from the desirable accept.

Systems different from the ones shown in Figure 7 and 8 are possible with, e.g. more stages or with the accept flows or reject flows directed to different stages as shown.

CLAIMS

1. A header for use with a bank of hydrocyclone separators comprising (a) a generally elongated hollow shell having a divider wall therein and extending longitudinally thereof to divide the header into first and second compartments, (b) a first set of nipples leading into said first compartment in a lateral direction relative to the lengthwise dimension of the header and adapted to each be connected to a respective one of the accept outlets of the hydrocyclone separators to receive the primary accept flow therefrom, (c) a second set of nipples each of which is disposed generally concentrically within a respective one of the nipples of the first set and each being sized in length and diameter so as to accommodate at least the air core which extends along the axis of each hydrocyclone separator during operation, (d) each of said second set of nipples being connected to said dividing wall and extending therethrough in fluid communication with said second chamber, (e) a first outlet connected to the first compartment for discharge of the combined primary accept flows, and (f) a second outlet connected to the second compartment for discharging the flow from the second set of nipples.

2. The header according to claim 1 wherein each of the nipples of the second set is of a diameter sufficient to receive therein not only the air core but also part of the liquid containing solids of low specific gravity which surrounds the air core during operation.

3. The header of claim 1 in combination with means for applying a partial vacuum to the second compartment of the header.

4. Apparatus for separating pulp stock or the like comprising a header as recited in claim 1 in combination with a plurality of hydrocyclone separators each having a feed inlet, an accept outlet and a reject outlet, each of said accept outlets being connected to a respective one of the nipples of the first set, and a rejects header spaced from the first mentioned header and being in fluid communication with the reject outlets of the respective
separators.

5.   Apparatus according to claim 4 including pump
means connected to the second outlet of the second compartment for applying a partial vacuum thereto, said pump means
operatively communicating with said rejects header whereby
the flow outwardly of said second compartment is directed
into the rejects header.

6.   Apparatus according to claim 5 wherein said pump
means comprises a jet pump or ejector pump, means for
supplying operating liquid under pressure to the pump, the
discharge from the pump being connected to the rejects
header so that the operating fluid together with the flow
from the second compartment passes into the rejects header
to dilute the reject flow therein.

7.   Apparatus according to claim 5 or 6 including
valve means for regulating the flow outwardly of said second
compartment through said second outlet.

8.   Apparatus according to claim 1 wherein said
header includes a further divider wall therein which serves
to define a third compartment in said header which is in
addition to said first and second compartments, and a third
set of nipples each being connected to said hollow shell
and each being in generally concentric surrounding relation
with a respective one of the nipples of the first set, said
header having an inlet for feed suspension connected to the
shell and communicating with the third compartment, and
the generally annular region defined between the generally
concentrically arranged first and third sets of nipples
defining annular passages for the flow of feed suspension
toward the individual hydrocyclone separators, each
one of the third set of nipples being adapted for connection
to the inlet feed end of a respective one of the hydrocylone
separators.

9.   The header of claim 8 in combination with means
for applying a partial vacuum to the second compartment
of the header.

10.   Apparatus for separating pulp stock or the like comprising a header as recited in claim 8 in combination
with a plurality of hydrocyclone separators each having an
annular feed inlet for receiving feed suspension from the
generally annular region defined between the first and
third sets of nipples, an accept outlet and a reject outlet,
each of said accept outlets being connected to a respective
one of the nipples of the first set, and a rejects header
spaced from the first mentioned header and being in fluid
communication with the reject outlets of the respective
separators, and each nipple of the third set of nipples
being connected to an inlet feed end of a respective one
of the hydrocyclone separators such that the annular feed
inlet thereof is in alignment with the generally annular
passage defined between the first and third nipples of
the header.

11.   Apparatus according to claim 10 including pump
means connected to the second outlet of the second compartment
for applying a partial vacuum thereto, said pump means
operatively communicating with said rejects header whereby
the flow outwardly of said second compartment is directed
into the rejects header.

12.   Apparatus according to claim 11 wherein said
pump means comprises a jet pump or ejector pump, means for
supplying operating liquid under pressure to the pump, the
discharge from the pump being connected to the rejects
header so that the operating fluid together with the
flow from the second compartment passes into the rejects
header to dilute the reject flow therein.

13.   Apparatus according to claim 12 including valve
means for regulating the flow outwardly of said second
compartment through said second outlet.

14.   The header according to claim 1, 2 or 3 wherein
the second set of nipples projects through said dividing
wall into said second compartment with the second outlet
being disposed relative thereto such that in the operating
position of the header with said nipples of the second
set being disposed generally upright, said second outlet
is disposed sufficiently below the upper outlet ends of said second set of nipples as to ensure free drainage of liquids away from said upper outlet ends.

15. The header according to claim 8, 9 or 10 wherein the second set of nipples projects through said dividing wall into said second compartment with the second outlet being disposed relative thereto such that in the operating position of the header with said nipples of the second set being disposed generally upright, said second outlet is disposed sufficiently below the upper outlet ends of said second set of nipples as to ensure free drainage of liquids away from said upper outlet ends.

16. Apparatus for separating pulp stock or the like comprising a header as recited in claim 8 in combination with a plurality of hydrocyclone separators each having an annular feed inlet for receiving feed suspension from the generally annular region defined between the first and third sets of nipples, an accept outlet and a reject outlet, each of said accept outlets being connected to a respective one of the nipples of the first set, and each nipple of the third set of nipples being connected to an inlet feed end of a respective one of the hydrocyclone separators such that the annular feed inlet thereof is in alignment with the generally annular passage defined between the first and third nipples of the header.

17. Apparatus according to claim 16 including pump means connected to the second outlet of the second compartment for applying a partial vacuum thereto.

18. Apparatus according to claim 17 wherein said pump means comprises a jet pump or ejector pump, means for supplying operating liquid under pressure to the pump, the discharge from the pump being connected to a rejects header which receives the reject flows from either the above recited or a further group of hydrocyclones so that the operating fluid together with the flow from the second compartment passes into the rejects header to dilute the reject flow therein.

19. Apparatus according to claim 16, 17 or 18 including valve means for regulating the flow outwardly of said second compartment through said second outlet.

20.  The header according to claim 16, 17 or 18 wherein the second set of nipples projects through said dividing wall into said second compartment with the second outlet being disposed relative thereto such that in the operating position of the header with said nipples of the second set being disposed generally upright, said second outlet is disposed sufficiently below the upper outlet ends of said second set of nipples as to ensure free drainage of liquids away from said upper outlet ends.

21.  A multi-stage stock separating apparatus employing a plurality of hydrocyclones grouped in separate stages with the reject flows of a first stage forming at least part of the inlet feed for a second stage and the reject flows of the second stage forming at least part of the inlet feed for a third stage, at least the first stage comprising apparatus as recited in claim 4, 10 or 16, and means connected to the second outlet of said second compartment for applying a suction thereto to cause a flow of secondary accept material therefrom.

22.  Apparatus according to claim 21 including means for directing said secondary accept flow into the reject flows from either the second or third stages.

Fig 1

Fig 2

Fig 3

0037278

Fig 4

Fig 5

Fig 6

Fig 7

Fig 8